# EUROPEAN PATENT APPLICATION

(11) **EP 4 400 615 A1**
(43) Date of publication of application: **17.07.2024**
(21) Application number: 22867198.8
(22) Date of filing: 24.08.2022
(51) Int. Cl.: C22B 3/06, C22B 3/44, C22B 7/00, C22B 15/00, C22B 23/00

(54) **METHOD FOR PROCESSING ALLOY**

(30) Priority: 10.09.2021 JP 2021147750
(71) Applicant: SUMITOMO METAL MINING CO., LTD., Tokyo 105-8716 (JP)
(72) Inventor: SHOUJI, Hirofumi, Niihama-shi, Ehime 792-0002 (JP); TAKENOUCHI, Hiroshi, Niihama-shi, Ehime 792-0002 (JP); MATSUOKA, Itsumi, Niihama-shi, Ehime 792-0002 (JP); SANJO, Shota, Niihama-shi, Ehime 792-0002 (JP); MATSUGI, Takumi, Niihama-shi, Ehime 792-0002 (JP); ASANO, Satoshi, Niihama-shi, Ehime 792-0002 (JP); HEGURI, Shin-ichi, Niihama-shi, Ehime 792-0002 (JP)
(74) Representative: Jones, Nicholas Andrew
(86) International application number: PCT/JP2022/031842
(87) International publication number: WO 2023/037876

(57) **Abstract**

A method is provided which enables selectively leaching nickel and/or cobalt from an alloy that contains copper and nickel and/or cobalt in a waste lithium ion battery.

This alloy processing method involves obtaining a solution that contains nickel and/or cobalt from an alloy that contains copper and nickel and/or cobalt, wherein the alloy processing method involves a leaching step for adding an acid solution to the alloy in a state in which a sulfurizing agent is also present, and obtaining a leachate and a leaching residue by performing leaching processing while controlling the redox potential (the reference electrode being a silver / silver chloride electrode) to at least 100mV and less than 250mV. In the leaching processing in the leaching step, an operation is performed that temporarily decreases the redox potential to less than or equal to -100mV.

## Description

### TECHNICAL FIELD

The present invention relates to an alloy processing method for obtaining a solution including nickel and/or cobalt from alloy including nickel and/or cobalt and copper.

### BACKGROUND ART

Vehicles such as electric vehicles and hybrid electric vehicles, and electronic devices such as cellular phones, smartphones and personal computers are equipped with a lithium ion battery (hereinafter referred to as "LIB") characterized by being light and having high power.

LIB has a structure in which a negative electrode material having a negative active material such as graphite bonded to the surface of copper foil used as a negative current collector, and a positive electrode material having a positive active material such as lithium nickelate or lithium cobaltate bonded to a positive current collector made of aluminum foil are put in an outer case made of metal such as aluminum or iron, or a plastic such as vinyl chloride together with a separator made of e.g. a porous polypropylene resin film, and the outer case is filled with an organic solvent including an electrolyte such as lithium hexafluorophosphate (LiPF₆) as an electrolyte solution.

When LIB is included in the vehicles and electronic devices as described above, LIB will not be able to be used due to deterioration of cars, electronic devices, and the like or the life of LIB itself in the future and the like, and become a discarded lithium ion battery (discarded LIB). It should be noted that "discarded LIB" includes defective products generated in the production process.

The discarded LIB includes valuable components such as nickel, cobalt and copper, and it is desired to recover and reuse these valuable components in order to effectively utilize resources.

In general, when a valuable component is efficiently recovered from a device, a member or a material made of metal, a dry treatment has been widely performed in the past, which utilizes the principle of pyrometallurgy in which the device, member or material is put in e.g. a furnace, melted at high temperature and separated into metal including the valuable material and slag including the other materials. Patent Document 1, for example, discloses a method for recovering a valuable metal using the dry treatment. Copper alloy including nickel and cobalt can be obtained by applying the method disclosed in Patent Document 1 to the recovery of a valuable metal from discarded LIB.

This dry treatment (hereinafter, also referred to as "dry method") has a disadvantage of requiring energy for heating to a high temperature using a furnace, but has an advantage of being able to separate various impurities together. Furthermore, the slag obtained by the dry treatment has also an advantage of having chemically stable properties, less concern about impact on environment, and being easily discarded.

However, when discarded LIB is treated by the dry treatment, there has been a problem in that some of valuable components, in particular cobalt, are almost distributed to the slag and recovery losses of cobalt cannot be avoided. In addition, metal obtained by the dry treatment is an alloy in which valuable components are present, and in order to reuse these components, each component is separated from this alloy, and refining to remove impurities is required.

As a method for separating an element, which has commonly been used in the dry treatment, a method has been known, in which copper and lead or lead and zinc, for example, are separated by slowly cooling a molten state at a high temperature. However, when copper and nickel are main components like a discarded LIB, copper and nickel have the properties of being uniformly melted in the whole composition range, and thus copper and nickel are only mixed and hardened into the form of layer even by slow cooling and cannot be separated.

Furthermore, there is a refining method in which nickel is disproportionated using carbon monoxide (CO) gas, and is volatilized and separated from copper and cobalt; however, there is also a problem in that it is difficult to secure safety due to the use of toxic CO gas.

In addition, as a method for separating copper and nickel, which has been industrially performed, there is a method for roughly separating a mixed mat (sulfide). In this method, a mat including copper and nickel is generated in the smelting process, and this is separated into a sulfide including a higher amount of copper and a sulfide including a higher amount of nickel by slowly cooling as in the case described above. In this separation method, however, the separation of copper and nickel is rough separation, and a treatment such as electrolytic refining is separately required to obtain high-purity nickel and copper.

In addition to the above, a method in which a difference in vapor pressure is utilized after forming a chloride has also been investigated. However, a large amount of toxic chlorine is handled in the process, and thus large scale measures against device corrosion and safety measures and the like are required. Therefore, it cannot be said that this method is industrially suitable.

As described above, the separation and refining of each element by the dry treatment has disadvantages of being limited to rough separation or requiring higher costs.

On the other hand, a wet treatment by a hydrometallurgy method using e.g. an acid treatment, a neutralization treatment and a solvent extraction treatment (hereinafter, also referred to as "wet method") has advantages of consuming less energy and being able to individually separate mixed valuable components and recover them at a higher purity grade.

However, when treating a discarded LIB using a wet treatment, e.g. a hexafluorophosphate anion as an electrolyte solution component contained in the discarded LIB is a material difficult to treat, which cannot be completely decomposed even by a high concentration of sulfuric acid at a high temperature, and is mixed in an acid solution in which valuable components have been leached. The hexafluorophosphate anion is a watersoluble carbonate ester, and thus it is also difficult to recover phosphorus and fluorine from the aqueous solution after recovering valuable materials, and there are large constraints on the environment, for example, various measures are required to suppress the release thereof into e.g. public sea areas.

Furthermore, it is not easy to obtain a solution which can efficiently leach a valuable component from a discarded LIB only by an acid and can be used for refining. In particular, leaching using a discarded LIB body by e.g. an acid is difficult, and it is not easy to completely leach a valuable component. In addition, when leaching is forced to be performed e.g. using an acid with a strong oxidation power, impurity components such as aluminum, iron and manganese, which are not industrially recovered, are also leached together with a valuable component, and there are problems that costs for a neutralizing agent to treat the impurities by e.g. neutralization increase, and the amount of waste water generated and the amount of sediment increase. Furthermore, a charge may remain in a discarded LIB, and there is a risk of e.g. heat generation and explosion when the discarded LIB is directly treated. Therefore, a discharge treatment of the remaining charge and the like takes time.

As described above, it cannot be necessarily said that the discarded LIB treatment using only a wet treatment is an advantageous method.

Therefore, an attempt to treat a discarded LIB, which is difficult to treat by individually using the above-described dry treatment and wet treatment, by a combined method of the dry treatment and the wet treatment has been carried out; impurities are removed as much as possible by the dry treatment e.g. roasting the discarded LIB to obtain a uniform treated material of discarded LIB, and the obtained treated material is separated into a valuable component and other components by the wet treatment.

In the method in which the dry treatment and the wet treatment are combined as described above, fluorine and phosphorus in an electrolyte solution are volatilized and removed by the dry treatment, and organic material members such as plastics which are structural parts of discarded LIBs and a separator are also decomposed by heat. In addition, the discarded LIB treated material with uniform properties and state is obtained after the dry treatment, and thus is also easily handled as a uniform raw material in the wet treatment.

However, even when the dry treatment and the wet treatment are merely combined, there still remains a recovery loss problem that cobalt included in a discarded LIB is distributed to slag.

A reduction melting method, for example, is also considered in which cobalt is efficiently distributed not to slag but to metal by adjusting treatment conditions in the dry treatment to reduce the distribution to the slag. However, metal obtained by the method described above forms a hardly soluble corrosion-resistant alloy containing copper as the base and nickel and cobalt. Even if an attempt to separate and recover a valuable component from this corrosion-resistant alloy by the wet treatment is carried out, acid dissolution is difficult and the component cannot be effectively recovered.

When chlorine gas, for example, is used for leaching using the corrosion-resistant alloy, the obtained solution (leachate) contains a high concentration of copper and relatively low concentrations of nickel and cobalt. Among these, nickel and cobalt can be easily separated using a known method such as solvent extraction; however, it is difficult to easily separate in particular copper from nickel and cobalt at lower costs.

In particular, as described above, leaching using the corrosion-resistant alloy derived from a discarded LIB by an acid is not easy, and even if leaching is attempted by adding an oxidant, the dissolution is delayed due to an oxide film (passivation film) formed on the surface of the alloy. Consequently, copper is also leached, and it has been difficult to selectively obtain a solution in which nickel and cobalt are dissolved without copper.

It should be noted that the above-described problems also exist in a case where nickel and/or cobalt and copper are separated from discarded batteries other than discarded LIBs, and moreover in a case where nickel and/or cobalt and copper are separated from an alloy derived from materials other than discarded batteries.

### Citation List

### Patent Document

Patent Document 1: Japanese Unexamined Patent Application, Publication No. 2012-172169

### DISCLOSURE OF THE INVENTION

### Problems to be Solved by the Invention

The present invention has been proposed in view of such circumstances, and an object thereof is to provide a method which can selectively leach nickel and/or cobalt from an alloy including nickel and/or cobalt and copper such as discarded lithium ion batteries.

### Means for Solving the Problems

As a result of diligent investigations, the present inventors found that in a leaching treatment of an alloy including nickel and/or cobalt and copper, an oxide film (passivation film) on the surface of the alloy can be removed by controlling an oxidation-reduction potential (ORP), thereby completing the present invention.

(1) A first aspect of the present invention is an alloy processing method for obtaining a solution including nickel and/or cobalt from an alloy including nickel and/or cobalt and copper, the method including a leaching step of adding an acid solution to the alloy in a state in which a sulfurizing agent coexists, and performing a leaching treatment while controlling an oxidation-reduction potential (the reference electrode is a silver/silver chloride electrode) to 100 mV or more and less than 250 mV to obtain a leachate and a leached residue, wherein an operation for temporarily reducing the oxidation-reduction potential to -100 mV or less is performed in the leaching treatment in the leaching step.
(2) A second aspect of the present invention is the alloy processing method as described in the first aspect, wherein the operation for temporarily reducing the oxidation-reduction potential to -100 mV or less is performed intermittently several times in the leaching treatment in the leaching step.
(3) A third aspect of the present invention is the alloy processing method as described in the first or second aspect, the method further including a reducing step of adding a reducing agent to the leachate obtained in the leaching step to perform a reduction treatment to obtain a post-reduction liquid and a reduction residue.
(4) A fourth aspect of the present invention is the alloy processing method as described in any one of the first to third aspects, the method further including an oxidation-neutralization step of adding a neutralizing agent and an oxidant to the reduced liquid obtained in the reducing step to perform an oxidation-neutralization treatment to obtain a post-oxidation-neutralization liquid and an oxidation-neutralization residue.
(5) A fifth aspect of the present invention is the alloy processing method as described in any one of the first to fourth aspects, wherein the alloy includes an alloy obtained by melting discarded batteries of lithium ion batteries.

### Effects of the Invention

According to the present invention, nickel and/or cobalt can be selectively leached from alloy including nickel and/or cobalt and copper such as a discarded lithium ion battery.

### BRIEF DESCRIPTION OF THE DRAWINGS

Fig. 1 is a flowchart showing an example of the flow of an alloy processing method;
Fig. 2 is a graph showing shifts in ORP values with respect to leaching time in Examples 1 and 2 and Comparative Example 1; and
Fig. 3 is a graph showing shifts in ORP values with respect to leaching time in Comparative Example 1.

### PREFERRED MODE FOR CARRYING OUT THE INVENTION

A specific embodiment of the present invention (hereinafter referred to as "present embodiment") will now be described in detail. It should be noted that the present invention is not limited to the embodiment below in any way, and appropriate modifications can be made within the scope of the object of the present invention. It should be noted that "X-Y" (X and Y are optional values) described in the description means "X or more and Y or less".

The alloy processing method according to the present embodiment is a method for obtaining a solution including nickel and/or cobalt from alloy including nickel and/or cobalt and copper.

As the alloy including nickel and/or cobalt and copper, which is treated, for example, waste products due to deterioration of cars, electronic devices, and the like, scraps of lithium ion batteries generated with the life of lithium ion batteries, or waste batteries such as defective products in the battery production process and the like can be used. In addition, alloy obtained when those waste batteries are heated and melted for reduction in the dry treatment can be used.

The alloy processing method will now be described in more detail using as an example a case where an alloy (the alloy including nickel and/or cobalt and copper) obtained by melting waste batteries of lithium ion batteries (hereinafter, referred to as "discarded lithium ion battery") is treated.

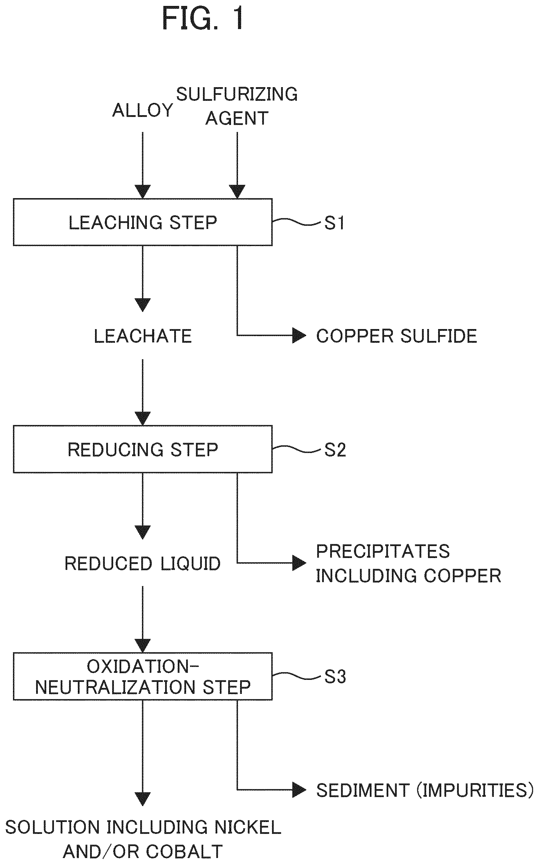

Fig. 1 is a flowchart showing an example of the flow of the alloy processing method according to the present embodiment. This method has a leaching step S1 of adding an acid solution to an alloy including nickel and/or cobalt and copper in a state in which a sulfurizing agent coexists, and performing a leaching treatment while controlling an oxidation-reduction potential (ORP) to a predetermined range to obtain a leachate and a leached residue, a reducing step S2 of adding a reducing agent to the obtained leachate for a reduction treatment to obtain a post-reduction liquid and a reduction residue, and an oxidation-neutralization step S3 of adding a neutralizing agent and an oxidant to the obtained reduced liquid for an oxidation-neutralization treatment to obtain a post-oxidation-neutralization liquid and an oxidation-neutralization residue.

In particular, in the method according to the present embodiment, an operation for temporarily reducing the OPR to - 100 mV or less is performed in the leaching step S1, in which the leaching treatment is performed while controlling the ORP to a predetermined range, specifically, a range from 150 mV or more to less than 250 mV as a value when a silver/silver chloride electrode is used as the reference electrode. Therefore, the oxide film (passivation film) formed on the surface of the alloy can be effectively removed in the leaching treatment, and nickel and/or cobalt can be selectively leached.

### (1) Leaching step

### [Concerning leaching treatment]

In the leaching step S1, the alloy including nickel and/or cobalt and copper (hereinafter simply referred to as "alloy") is subjected to the leaching treatment using the acid. At this time, the sulfurizing agent is added before the alloy is brought into contact with the acid or at the same time as when the acid is brought into contact with the alloy to perform the leaching treatment under conditions in which the sulfurizing agent coexists. The leachate in which nickel and/or cobalt is dissolved and a leached residue mainly including copper sulfide are obtained by the leaching treatment.

The reactions caused by the leaching treatment in the leaching step S1 are shown in the formulas [1] to [5] below. A case where solid sulfur (S) is used as the sulfurizing agent and sulfuric acid is used as the acid is shown in the following formulas.
·

   Cu + S -> CuS [1],
·

   Ni + H₂SO₄ + 1/2O₂ -> NiSO₄ + H₂O [2],
·

   Co + H₂SO₄ + 1/2O₂ -> CoSO₄ + H₂O [3],
·

   H₂S + 1/2O₂ -> S + H₂O [4]

   and
·

   CuS + 2O₂ -> CuSO₄ [5].

Specifically, the alloy is subjected to the leaching treatment in a state in which the acid and the sulfurizing agent coexist in the leaching step S1, and thus copper leached from the alloy reacts with the sulfurizing agent and can be deposited in the form of copper sulfide (the reaction formula [1]). The deposited copper sulfide is recovered as a leached residue. On the other hand, by the leaching treatment using the acid, nickel and/or cobalt forming the alloy can be leached into the solution to obtain the leachate in which nickel and cobalt exist as ions (the reaction formulas [2] and [3]). In this way, copper and nickel and/or cobalt can be separated from the alloy.

It should be noted that even when leached nickel and/or cobalt reacts with the sulfurizing agent to form a sulfide, the sulfide is decomposed due to the existence of the acid solution, and nickel and cobalt exist in the leachate as ions. In addition, a part of copper which has not reacted with the sulfurizing agent may remain in the leachate. Copper remaining in the leachate as described above can be effectively and efficiently separated and removed in the reducing step S2 described below.

### [Concerning alloy to be treated]

The shape of the alloy to be treated, i.e. the alloy obtained by melting discarded lithium ion batteries is not particularly limited, and is alloy casted into a plate shape, alloy obtained as a rod material by properly cutting alloy extended into a linear shape, alloy in a powder form (hereinafter the alloy in a powder form will be referred to as "alloy powder") and the like. Among these, alloy powder in a powder form is preferably used as a target to be treated because the leaching treatment can be more effectively and efficiently performed.

In a case where the alloy is a powder material, when the particle diameter of the alloy powder is approximately 300 um or less, the leaching treatment can be more efficiently performed. On the other hand, when the particle diameter is too fine, costs increase and also dust generation or ignition are caused. Therefore, the particle diameter of the alloy powder is preferably approximately 10 um or more.

In the leaching treatment, it is preferred that the alloy to be treated be preliminarily washed with a weak acid. By doing this, the surface of the alloy can be subjected to an activation treatment, and the leaching reaction can be promoted.

### [Concerning acid solution]

The acid solution used in the leaching treatment is not particularly limited, and a mineral acid such as sulfuric acid, hydrochloric acid or nitric acid can be used. A mixed solution of these mineral acids may be also used. Furthermore, an acid solution containing a chloride in sulfuric acid, for example, may be used. Among these, when the alloy to be treated is derived from a discarded lithium ion battery, an acid including sulfuric acid is preferably used to achieve an ideal recycling method in which the discarded lithium ion battery is recycled and used again as a lithium ion battery raw material, what is called "battery to battery". By using sulfuric acid, the leachate can be obtained in the form of sulfate which is easily used for a positive electrode material of a lithium ion battery.

In addition, the acid solution added leaches nickel and/or cobalt included in the alloy and generates nickel and cobalt salts. A sufficient (surplus) amount of free acid (when a sulfuric acid solution, for example, is used, "free sulfuric acid") used for a driving force to allow the leaching reaction to promptly proceed is also required. Therefore, the amount of the acid solution added is required to be above 1 equivalent and 1.2 equivalents or less.

In the leaching treatment, the acid solution and the alloy are fed to a device in which a plurality of mixing parts such as a thickener are connected, and the acid and the alloy may be brought into contact with each other in a stepwise way by a countercurrent flow. For example, the alloy is fed to a mixing part on the top stage in this device, the acid is fed to a mixing part on the bottom stage in this device, and the acid and the alloy are brought into contact with each other in a stepwise way by a countercurrent flow.

### [Concerning sulfurizing agent]

As the sulfurizing agent added with the acid, sodium hydrosulfide or elemental sulfur can be used. When elemental sulfur is used, it is preferred to moderately crush it in order that the reaction will easily proceed.

The amount of the sulfurizing agent added (coexisting amount) is preferably an amount of 1 equivalent or more with respect to the amount of copper included in the alloy. In addition, the amount of the sulfurizing agent added is preferably 1.5 equivalents or less and preferably 1.25 equivalents or less with respect to the amount of copper included in the alloy. When the amount of the sulfurizing agent added is too high, there is a possibility that it will not contribute to the promotion of the reaction, but rather increase the amount of the residue, which leads to an increase in time for handling, and also an increasing possibility of the generation of hydrogen sulfide gas.

### [Concerning conditions of leaching treatment]

The conditions such as the temperature and time of the leaching treatment and the concentration of the slurry obtained are preferably set to proper ranges by preliminary tests. In addition, the leachate may be bubbled with e.g. air in order that a uniform reaction will proceed in the leaching treatment. Furthermore, divalent copper ion may be added in the leaching treatment, and therefore divalent copper ion can act as a catalyst to promote the leaching reaction.

In addition, the oxidation-reduction potential (ORP) and pH of the leachate obtained are measured in the leaching treatment, and the measured ORP and pH are preferably monitored and controlled.

### (pH conditions)

The pH conditions are preferably controlled so that the pH of the leachate obtained will be within a range from 0.8 or more to 1.6 or less. By performing the leaching treatment within the range as described above, leaching is promoted, and also a situation in which deposited copper sulfide is excessively oxidized and redissolved can be more efficiently suppressed.

### (Oxidation-reduction potential)

In the method according to the present embodiment, the leaching treatment is performed while controlling the oxidation-reduction potential (ORP) to 100 mV or more and less than 250 mV as a value when a silver/silver chloride electrode is used as the reference electrode. The ORP is more preferably controlled to 150 mV or more and 200 mV or less. By controlling the ORP within the range as described above and performing the leaching treatment, nickel and/or cobalt leaching is promoted, and also redissolution of deposited copper sulfide due to excessive oxidation can be suppressed, and copper and nickel and/or cobalt can be more effectively leached.

Specific examples of the method for controlling the ORP include a method in which an oxidant is added. As the oxidant, conventionally known agents such as oxygen, air, hydrogen peroxide and ozone gas can be used. When a gaseous oxidant, for example, is used, the ORP of the leachate can be controlled by bubbling the agent in the solution to adjust the amount thereof fed (gas supply amount) in the leaching treatment. Specifically, when the ORP of the leachate excessively increases, the ORP can be reduced by reducing the amount of the oxidant fed or stopping the feed. Contrarily, when the oxidation-reduction potential is reduced to around the lower limit thereof, the ORP can be increased by increasing the amount of the oxidant fed.

The alloy to be treated easily forms an oxide film in a solution in which an oxidant and dissolved oxygen exist as in the case of leaching using the acid. When the oxide film is formed on the alloy, leaching does not sufficiently proceed even in a state in which nickel and/or cobalt to be recovered remains in the alloy, and an increase in only the ORP value of the leachate, what is called passivation, may be caused. In addition, when the surface of the alloy is oxidized, a large amount of copper ion flows into the leachate with leaching by the acid solution, and thus the leachate has greater loads on a treatment in the reducing step, the subsequent step.

Therefore, in the method according to the present embodiment, an operation for temporarily reducing the ORP value to -100 mV or less is performed in the leaching treatment performed while controlling the ORP within the range as described above, i.e. a range from 100 mV or more to less than 250 mV.

The "temporarily reducing the ORP value to -100 mV or less" indicates that the ORP is reduced to a minus value, -100 mV or less, not continuously but for a short transient time in the leaching treatment for a predetermined time performed while controlling the ORP to 100 mV or more and less than 250 mV. It should be noted that the transient time is not particularly limited, and can be, for example, for about 5 minutes to 30 minutes.

As described above, by temporarily reducing the ORP value to a reducing atmosphere, -100 mV or less, the surface of the alloy can be reduced to remove the oxide film (passivation film). Therefore, selective leaching of nickel and/or cobalt can be allowed to effectively proceed. This is because by reducing the ORP value to a reducing atmosphere (a minus ORP value region), the reaction represented by the above reaction formula [4] does not proceed and the oxide film on the surface of the alloy is removed by the reaction with hydrogen sulfide gas like the reaction formula [6] below:
·

   CuO + H₂S -> CuS + H₂O [6].

Simultaneously with the above, by temporarily reducing the ORP value to a reducing atmosphere, -100 mV or less, the sulfurization reaction of copper ion represented by the reaction formula [7] below can be also promoted, and copper ion leached into the leachate can be removed:
·

   CuSO₄ + H₂S -> CuS + H₂SO₄ [7].

As a specific method for temporarily reducing the ORP value to -100 mV or less, the amount of the oxidant fed can be temporarily reduced or the feed can be stopped. Alternatively, a reducing agent may be temporarily added. The ORP value is reduced to -100 mV or less as described above, and then returned to a range from 100 mV or more to less than 250 mV again, for example, by increasing the amount of the oxidant fed to the original level.

The operation for temporarily reducing the ORP value to - 100 mV or less is performed at least once and more preferably intermittently several times in the leaching treatment. As described above, the oxide film on the surface of the alloy is easily removed by performing the above operation intermittently several times in the leaching treatment, and copper can be more effectively separated to selectively leach nickel and/or cobalt.

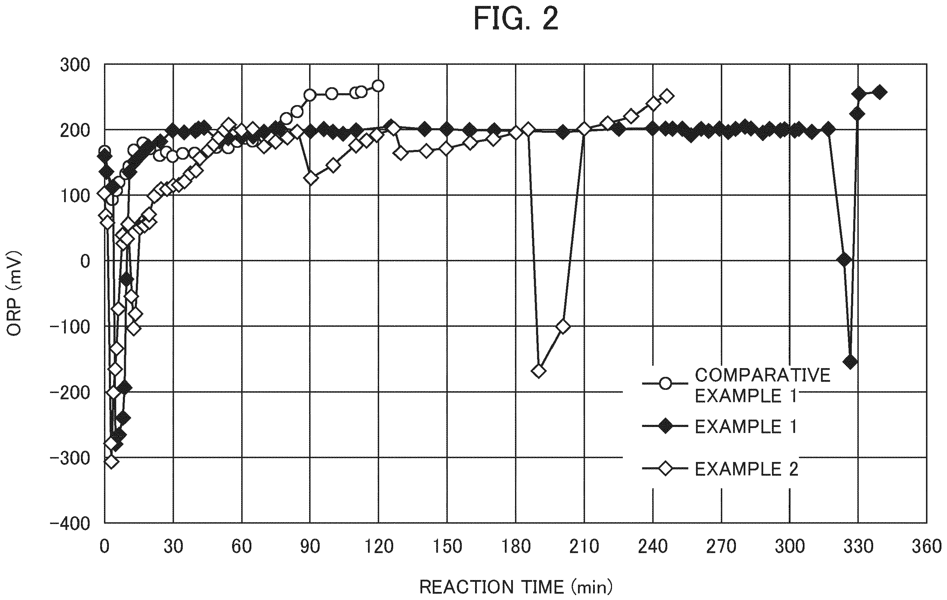

The "performing the operation intermittently several times" indicates that when the operation for reducing the ORP from a range of 100 mV or more and less than 250 mV to -100 mV or less is regarded as one operation, the ORP value is returned to a range from 100 mV or more to less than 250 mV again after every one operation, the leaching treatment is performed while controlling the ORP value within a range from 100 mV or more and less than 250 mV for a predetermined time, and then the above operation (the operation for reducing the ORP value to -100 mV or less) is repeated again. It should be noted that the ORP values with respect to the reaction time in this case are shifted, for example, like the graph shown in Examples described below (see Fig. 2 as a specific example).

The number of times when the above operation is performed several times is not particularly limited, and is preferably properly adjusted depending on e.g. the amount of alloy treated and treating time.

### [Reducing step]

In the reducing step S2, the leachate obtained in the leaching treatment in the leaching step S1 is subjected to a reduction treatment by adding a reducing agent to obtain a reduced liquid (post-reduction liquid) including nickel and/or cobalt and a reduction residue.

In the leaching treatment, copper forming the alloy is leached by the acid and dissolved in the solution together with nickel and/or cobalt, and some of it does not react with the sulfurizing agent and may remain in the solution. In the reducing step S2, therefore, precipitates including copper can be generated by reducing a trace amount of copper remaining in the obtained leachate, and the reduction residue including generated precipitates can be separated by solid-liquid separation to obtain a reduced liquid including nickel and/or cobalt from which copper has been separated. Because of this, copper can be selectively separated in a state in which high leaching rates of nickel and/or cobalt are maintained.

The reducing agent is not particularly limited, and more basic metal than copper, for example, can be used. In particular, it is preferred that using metal including nickel and/or cobalt, the leachate be brought into contact with the metal to reduce copper. More specifically, as the metal including nickel and/or cobalt, alloy including nickel and/or cobalt and copper can be used, which is a target to be treated by the method according to the present embodiment, i.e. a target of the leaching treatment in the leaching step S1. It should be noted that as the reducing agent, not only one component but also a mixture of a plurality of components may be used.

Because the method according to the present embodiment obtains a solution including nickel and/or cobalt, when the metal including nickel and/or cobalt to be recovered is used as the reducing agent, it is not required to separately recover the reducing agent in the subsequent step, and the method is industrially advantageous. In addition, the metal including nickel and/or cobalt used as the reducing agent is naturally oxidized and dissolved in the post-reduction liquid, and thus the amount of nickel and/or cobalt recovered can be increased.

In addition to the above-described metal, a sulfide can be also used as the reducing agent. The sulfide may be in any form of solid, liquid or gas. The reducing agent may be also a mixture of a powder material of alloy to be treated in the above-described leaching treatment and sulfur. When sulfur is used as the reducing agent, it may be added in an equivalent with respect to copper included in the treated liquid and the powder material of alloy.

As the reducing agent, alloy powder, which is obtained by pulverization of molten metal of the alloy to be treated, may be also used. It should be noted that when a powder material itself of the alloy to be treated in the leaching treatment is used as the reducing agent, a powder material including nickel and cobalt in amounts higher than the equivalents required to reduce copper in the leachate may be used.

About the conditions of the reduction treatment, the pH of the post-reduction liquid obtained is preferably controlled to 1.6 or less. In addition, the liquid temperature is preferably 50°C or higher, which is equivalent to that in the leaching treatment. It should be noted that a rough standard of the end point when copper is removed (reaction end point) can be a time point when the ORP is 0 mV or less.

### [Oxidation-neutralization step]

The oxidation-neutralization step S3 can be provided in the method according to the present embodiment. In the oxidation-neutralization step S3, the reduced liquid obtained in the reducing step S2 is subjected to an oxidation-neutralization treatment by adding a neutralizing agent and an oxidant to obtain a post-oxidation-neutralization liquid and an oxidation-neutralization residue.

As described above, precipitates of impurities such as iron and phosphorus included in the reduced liquid are generated by the oxidation-neutralization treatment, and a separated and refined solution including high concentrations of nickel and/or cobalt can be obtained.

As the oxidant, an oxidant such as hydrogen peroxide or hypochlorous acid is preferably used. The oxidant is preferably added while the oxidation-reduction potential (ORP) of the solution is monitored and controlled within a predetermined range. Specifically, the oxidant is added to the solution to control the ORP within e.g. a range from 380 mV or more and 430 mV or less (silver/silver chloride is used as the reference electrode).

In addition, an oxidation rection is caused by adding an oxidant, and the pH of the solution is then preferably controlled within a range from 3.8 or more to 4.5 or less by adding a neutralizing agent. A neutralization treatment is performed while controlling pH within the range as described above, thereby being able to effectively precipitate impurities, e.g. at least iron and/or phosphorus.

The neutralizing agent is not particularly limited, and an alkali such as sodium hydroxide or potassium hydroxide is preferably used.

In the oxidation-neutralization treatment, an oxidant may be added to the reduced liquid after adding the neutralizing agent, and the oxidant and the neutralizing agent may be added to the reduced liquid at the same time. In particular, it is preferred that the neutralizing agent be added to the reduced liquid after adding the oxidant. In a case where the oxidant is added to the reduced liquid in a state in which pH is high by adding the neutralizing agent, for example, iron is not sufficiently oxidized when iron is included as impurities. Fe(OH)₃ precipitates (iron sediment) are not generated, and separation of impurities may be insufficient.

It should be noted that trace amounts of impurities which cannot be removed even by the oxidation-neutralization treatment may be removed by providing a removing step using a known technique such as a solvent extraction method or an ion exchange method after the oxidation-neutralization step S3.

### EXAMPLES

The present invention will now be described in more detail by way of examples thereof. It should be noted, however, that the present invention is not limited to the following examples in any way.

### [Example 1]

### (Leaching step)

Discarded lithium ion batteries (discarded LIBs) were oxidation-roasted by heating under an oxidation atmosphere, and the dry treatment was then performed, in which a reducing agent was added to the obtained oxidation-roasted material, which was heated and melted for reduction. Alloy in a molten state obtained by reduction melting was solidified to obtain alloy powder in the form of powder with a particle diameter of less than 300 um. The obtained alloy powder was used as the alloy to be treated (alloy including nickel and cobalt, and copper). Table 1 below shows the composition of alloy powder, which is analyzed using an ICP analyzer.

**[Table 1]**

| [Composition] | Grade (mass%) | | | |
|---|---|---|---|---|
| | Ni | Co | Cu | Fe |
| Alloy | 24 | 12 | 62 | 1.5 |

Next, leaching was performed using the alloy powder having the composition shown in Table 1 above by a sulfuric acid solution in the conditions shown in Table 2 below.

Specifically, pure water was put in a 500 mL separable flask with baffle plates, and elemental sulfur was added thereto as a sulfurizing agent in 1.25 equivalents with respect to the amount of copper included in the alloy powder (S-mol/Cu-mol) together with the alloy powder. The obtained mixture was stirred at a revolution speed of 1000 rpm and simultaneously heated to about 60°C, a setting temperature.

The oxidation-reduction potential (ORP) value (reference electrode: silver/silver chloride electrode) was adjusted by air bubbling at a flow rate of 0.5 L/min using a cylindrical gas injection pipe. In addition, the alloy powder leaching and pH adjustment were performed so that pH 1.0 was maintained by adding a 70% sulfuric acid solution at a rate of 14 mL/min.

The leaching treatment was performed while controlling the ORP within a range from 150 mV or more to less than 200 mV in Example 1. In this Example 1, the operation for temporarily reducing the ORP value to -100 mV or less was performed several times in the leaching treatment to reduce the surface of the alloy. The ORP was controlled by adjusting the air flow rate.

It should be noted that the reaction end point was regarded as a point at which the air flow rate was gradually reduced after the ORP value reached 250 mV, and the ORP value was not reduced and was retained at 250 mV or more even after air bubbling was stopped.

Slurry after leaching was recovered and subjected to solid-liquid separation by filtration using a vacuum pump, and grades of the filtrate after leaching (leachate) and the leached residue were analyzed by an ICP analyzer.

### [Example 2]

In Example 2, the leaching treatment was performed in the same manner as in Example 1 except that the reaction temperature was about 80°C (setting temperature). It should be noted that in Example 2, the operation for temporarily reducing the ORP value to -100 mV or less was also performed several times in the leaching treatment, but was performed at timings partly different from those in the operation in Example 1 (see Fig. 2).

### [Comparative Example 1]

In Comparative Example 1, the treatment was performed along the course without controlling the ORP. In addition, the operation for temporarily reducing the ORP value to -100 mV or less as performed in Examples 1 and 2 was not performed. The same procedure as in Example 1 wad performed except for the above.

### [Conditions and Results]

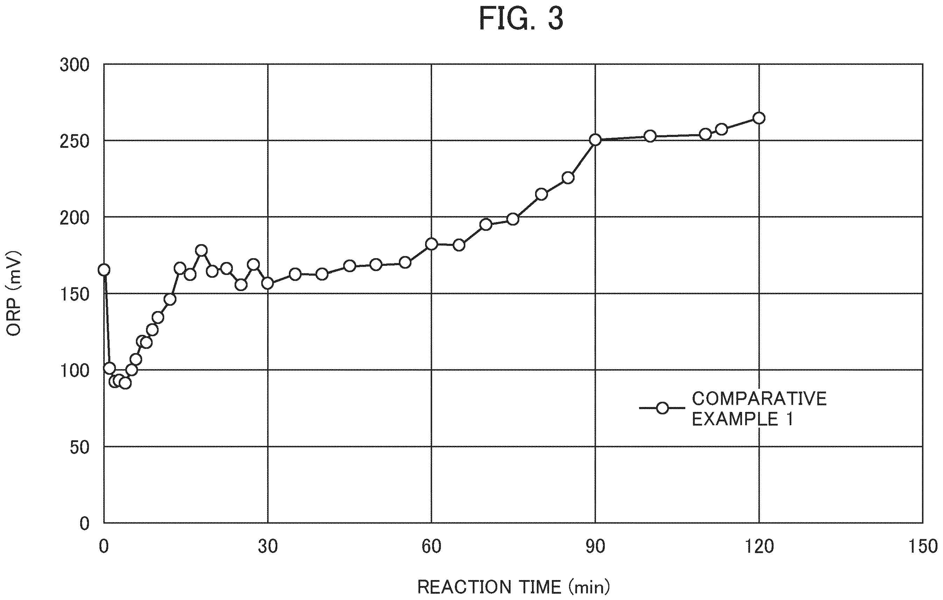

Table 2 below summarizes the conditions of the leaching treatment in Examples 1 and 2 and Comparative Example 1. Fig. 2 also shows shifts in ORP values with respect to leaching time in Examples 1 and 2 and Comparative Example 1 together, and Fig. 3 shows shifts in ORP values with respect to leaching time in Comparative Example 1. Table 3 below shows analysis results of the leachate and leached residue in each of Examples 1 and 2 and Comparative Example 1.

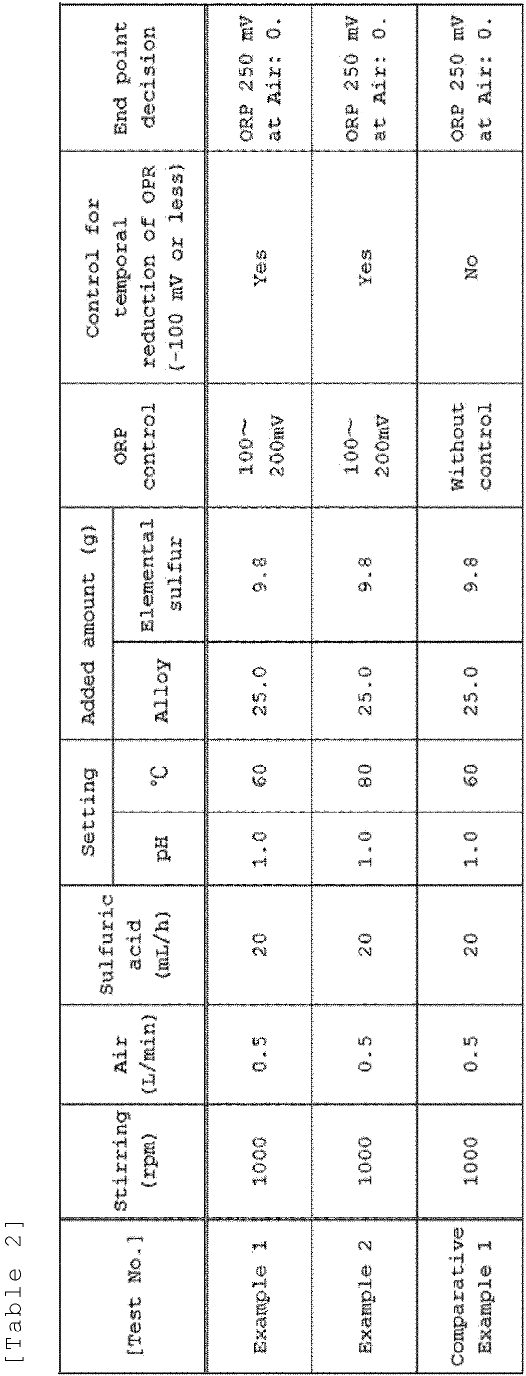

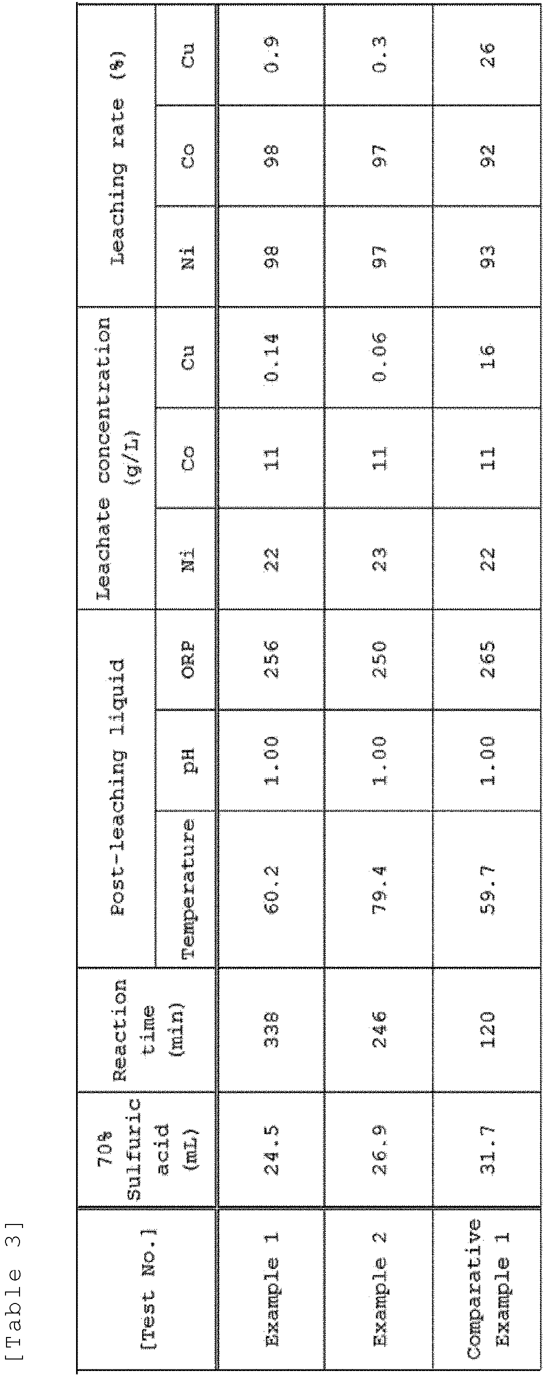

As shown in the results in Table 3, nickel and cobalt leaching could be promoted by performing the operation for obtaining the ORP value within a reduction atmosphere (minus value) at the time of acid leaching. It is thought that this is because the surface of alloy could be activated (the oxide film could be removed) by obtaining the reduction atmosphere (minus ORP value) at least once in a case where the surface of the alloy was inactivated (the oxide film was formed), and selective leaching of nickel and cobalt could be promoted.

## Claims

1. An alloy processing method for obtaining a solution comprising nickel and/or cobalt from an alloy comprising nickel and/or cobalt and copper, the method comprising,
a leaching step of adding an acid solution to the alloy in a state in which a sulfurizing agent coexists, and performing a leaching treatment while controlling an oxidation-reduction potential (a reference electrode is a silver/silver chloride electrode) to 100 mV or more and less than 250 mV to obtain a leachate and a leached residue,
an operation for temporarily reducing the oxidation-reduction potential to -100 mV or less being performed in the leaching treatment in the leaching step.

2. The alloy processing method according to claim 1,
wherein the operation for temporarily reducing the oxidation-reduction potential to -100 mV or less is performed intermittently several times in the leaching treatment in the leaching step.

3. The alloy processing method according to claim 1, the method further comprising,
a reducing step of adding a reducing agent to the leachate obtained in the leaching step to perform a reduction treatment to obtain a post-reduction liquid and a reduction residue.

4. The alloy processing method according to claim 1, the method further comprising,
an oxidation-neutralization step of adding a neutralizing agent and an oxidant to the reduction liquid obtained in the reducing step to perform an oxidation-neutralization treatment to obtain a post-oxidation-neutralization liquid and an oxidation-neutralization residue.

5. The alloy processing method according to any one of claims 1 to 4,
wherein the alloy comprises an alloy obtained by melting discarded batteries of lithium ion batteries.
